# EUROPEAN PATENT SPECIFICATION

(11) **EP 4 408 065 B1**
(45) Date of publication and mention of the grant of the patent: **17.06.2026**
(21) Application number: 22882672.3
(22) Date of filing: 10.10.2022
(51) Int. Cl.: H04L 47/32, H04W 28/02, H04W 28/10, H04W 40/22, H04L 47/28, H04W 80/02, H04W 88/04

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 21.10.2021 CN 202111228215
(43) Date of publication of application: 31.07.2024
(73) Proprietor: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN); PAN, Xiaodan, Shenzhen, Guangdong 518129 (CN); LI, Xiangyu, Shenzhen, Guangdong 518129 (CN)
(74) Representative: Pfenning, Meinig & Partner mbB
(86) International application number: PCT/CN2022/124349
(87) International publication number: WO 2023/066062

(56) References cited:
- WO-A1-2021/106761
- CN-A- 111 901 847
- CN-A- 113 472 683
- US-A1- 2015 264 615
- US-A1- 2017 064 592
- US-A1- 2022 386 333
- ZTE CORPORATION, SANECHIPS: "Discussion on QoS of Sidelink relay", 3GPP TSG-RAN WG2 MEETING#115-E, R2-2108149, 6 August 2021 (2021-08-06), XP052034652

## Description

### TECHNICAL FIELD

This application relates to the field of communication technologies, and in particular, to a communication method, a communication apparatus, a computer-readable storage medium and a computer program product.

### BACKGROUND

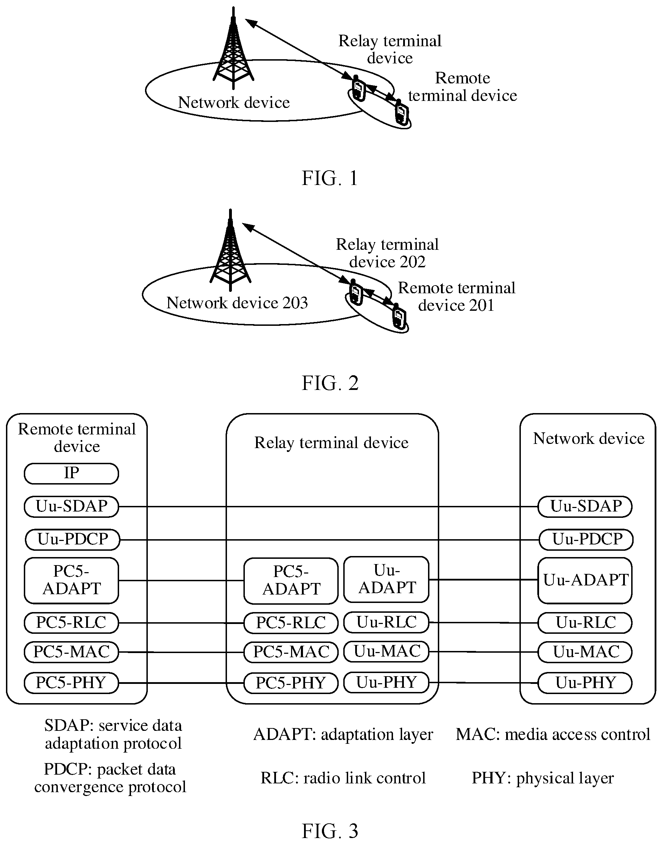

In a scenario shown in FIG. 1, in a process in which a remote terminal device accesses a network device via a relay terminal device and transmits data to the network device via the relay terminal device, when the data is transmitted to a packet data convergence protocol (packet data convergence protocol, PDCP) layer of the remote terminal device, the remote user equipment starts a discard timer (discardTimer) at the PDCP layer. When discardTimer expires, a part of the data may not be sent to the network device and may be buffered in the relay terminal device. If the relay terminal device continues to send the buffered timeout data, air interface resources are wasted. US2022386333A1 discloses a communication system including a base station, and a plurality of communication terminals configured to perform communication with the base station and perform Device-to-Device communication. A first communication terminal transmits, to a third communication terminal, a scheduling request for performing the Device-to-Device communication with a second communication terminal. The third communication terminal transmits, to the base station, the scheduling request received from the first communication terminal. In response to the scheduling request received from the third communication terminal, the base station generates scheduling information on the Device-to-Device communication between the first communication terminal and the second communication terminal, and transmits the scheduling information to the third communication terminal. The third communication terminal transmits, to the first communication terminal, the scheduling information received from the base station.
US2015264615A1 discloses a data transmission control method, apparatus and system. A radio communication node receives a data packet sent by a base station, where the data packet is generated by using a Packet Data Convergence Protocol protocol data unit PDCP PDU of the base station. The radio communication node acquires the PDCP PDU, which is used as a Radio Link Control service data unit RLC SDU, in the data packet.
US2017064592A1 discloses a method of configuring a discard timer wherein first wireless access network node receives, from a second wireless access network node, delay information relating to a delay in buffering data at a protocol layer in the second wireless access network node. The first wireless access network node configures a discard timer based on the received delay information for a packet to be sent to a user equipment.

### SUMMARY

The invention is defined in the appended set of claims. This application discloses a communication method, a communication apparatus, and a communication system, to save air interface resources of a relay terminal device.

A first aspect of embodiments of this application discloses a communication method, including:

A relay terminal device receives a first data packet from a first device, and starts a first timer corresponding to the first data packet, where the first data packet is a data packet to be forwarded to a second device, and the relay terminal device provides a relay service for the second device.

The relay terminal device discards the first data packet when the first timer expires.

In the foregoing method, when the first device is a remote terminal device, the second device is a network device, and when the first device is a network device, the second device is a remote terminal device. By disposing the first timer in the relay terminal device, when the first timer expires, the first data packet that is sent by the first device to the relay terminal device and that is buffered in the relay terminal device and that is not sent to the network device can be discarded, so that air interface resources of the relay terminal device are saved.

In a possible implementation, the first timer includes a timer at a radio link control layer or a timer at an adaptation layer in the relay terminal device.

In another possible implementation, that the relay terminal device discards the first data packet includes: A first layer, a second layer, or a third layer of the relay terminal device discards the first data packet.

In another possible implementation, that a third layer of the relay terminal device discards the first data packet further includes: The third layer receives first indication information from the first layer or the second layer, and discards the first data packet based on the first indication information.

In the foregoing method, by sending, by the first layer or the second layer of the relay terminal device, the first indication information to the third layer of the relay terminal device, the first data packet can be deleted at a lower layer, so that the air interface resource of the relay terminal device is saved.

In another possible implementation, the second layer is a lower layer of the first layer, and the third layer is a lower layer of the second layer.

In another possible implementation, when the first device is the remote terminal device and the second device is the network device, the first layer is a radio link control layer of a Uu interface, the second layer is a media access control layer of the Uu interface, and the third layer is a physical layer of the Uu interface; or the first layer is a radio link control layer of a PC5 interface, the second layer is an adaptation layer, and the third layer is a radio link control layer of a Uu interface. Alternatively, when the first device is the network device and the second device is the remote terminal device, the first layer is a radio link control layer of a Uu interface, the second layer is an adaptation layer, and the third layer is a radio link control layer of a PC5 interface; or the first layer is a physical layer of a radio link control layer of a PC5 interface, the second layer is a media access control layer of the PC5 interface, and the third layer is a physical layer of the PC5 interface.

In another possible implementation, that the relay terminal device discards the first data packet includes: The relay terminal device determines, based on a cascading relationship between the first data packet and a second data packet and/or information about a second timer corresponding to the second data packet, whether to discard the first data packet and/or the second data packet.

In another possible implementation, the cascading relationship between the first data packet and the second data packet includes: The first data packet and the second data packet are cascaded, or the first data packet and the second data packet are not cascaded.

In another possible implementation, that the relay terminal device determines, based on a cascading relationship between the first data packet and a second data packet and/or information about a second timer corresponding to the second data packet, whether to discard the first data packet and/or the second data packet includes: The relay terminal device determines, based on that the first data packet and the second data packet are cascaded and that the second timer corresponding to the second data packet expires, to discard the first data packet and the second data packet.

In another possible implementation, that the relay terminal device determines, based on a cascading relationship between the first data packet and a second data packet and/or information about a second timer corresponding to the second data packet, whether to discard the first data packet and/or the second data packet includes: The relay terminal device determines, based on that the first data packet and the second data packet are not cascaded, to discard the first data packet.

In another possible implementation, that the relay terminal device determines, based on a cascading relationship between the first data packet and a second data packet and/or information about a second timer corresponding to the second data packet, whether to discard the first data packet and/or the second data packet includes: The relay terminal device determines, based on that the first data packet and the second data packet are cascaded and that the second timer corresponding to the second data packet does not expire, not to discard the first data packet and the second data packet.

In another possible implementation, that the relay terminal device discards the first data packet when the first timer expires includes:

The relay terminal device determines, based on information about the first timer and a transmission status of the first data packet, whether to discard the first data packet.

In another possible implementation, the transmission status includes one or more of the following: information about a transport layer and information about whether initial transmission has been performed.

In another possible implementation, the relay terminal device determines, based on the information about the first timer and the transmission status of the first data packet, to discard the first data packet, and the method further includes:

The relay terminal device sends second indication information to the second device, where the second indication information indicates that the first data packet is discarded.

In another possible implementation, the method further includes: The relay terminal device releases a process corresponding to the first data packet.

A second aspect discloses a communication method, including:

A first device sends a first data packet to a second device via a relay terminal device, and starts a timer corresponding to the first data packet.

The first device sends first indication information to the relay terminal device when the timer expires, where the first indication information indicates the relay terminal device to discard the first data packet.

In the foregoing method, when the timer in the first device expires, the first device sends the first indication information to the relay terminal device. After receiving the first indication information, the relay terminal device discards the first data packet that is sent by the first device to the relay terminal device and that is buffered in the relay terminal device and that is not sent to a network device. In this way, air interface resources of the relay terminal device are saved.

In a possible implementation, the timer includes a timer at a packet data convergence protocol layer in the first device.

In another possible implementation, the first indication information includes a radio link control layer status report or an adaptation layer status report.

In another possible implementation, the method further includes: The first device determines the first indication information.

In another possible implementation, the method further includes: The first device determines the first indication information based on second indication information from the relay terminal device, where the second indication information indicates a data packet that is successfully sent.

In another possible implementation, that the first indication information indicates the relay terminal device to discard the first data packet includes: The first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information is carried in high-layer signaling, where the high-layer signaling includes radio resource control signaling or media access control signaling.

In another possible implementation, the first indication information includes a packet data convergence protocol PDCP serial number SN.

A third aspect discloses a communication method, including:

A relay terminal device receives first indication information from a first device.

The relay terminal device discards a first data packet based on the first indication information, where the first data packet is a data packet sent by the first device to a second device via the relay terminal device, and the relay terminal device provides a relay service for the second device.

In the foregoing method, after receiving the first indication information, the relay terminal device discards the first data packet that is sent by the first device to the relay terminal device and that is buffered in the relay terminal device and that is not sent to a network device, to save air interface resources of the relay terminal device.

In a possible implementation, the method further includes: The relay terminal device sends second indication information to the first device, where the second indication information indicates a data packet that is successfully sent, and the first indication information is determined based on the second indication information.

In the foregoing method, by sending, by the relay terminal device, the second indication information to the first device, the first device does not need to set discarding statuses of all data packets, so that overheads are reduced.

In another possible implementation, the first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

A fourth aspect of embodiments of this application discloses a communication apparatus, including a communication unit and a processing unit.

The communication unit is configured to receive a first data packet from a first device, and start a first timer corresponding to the first data packet, where the first data packet is a data packet to be forwarded to a second device, and a relay terminal device provides a relay service for the second device.

The processing unit is configured to discard the first data packet when the first timer expires.

In a possible implementation, the first timer includes a timer at a radio link control layer or a timer at an adaptation layer in the relay terminal device.

In another possible implementation, a first layer, a second layer, or a third layer of the relay terminal device discards the first data packet.

In another possible implementation, the third layer receives first indication information from the first layer or the second layer, and discards the first data packet based on the first indication information.

In another possible implementation, the second layer is a lower layer of the first layer, and the third layer is a lower layer of the second layer.

In another possible implementation, the processing unit is configured to determine, based on a cascading relationship between the first data packet and a second data packet and/or information about a second timer corresponding to the second data packet, whether to discard the first data packet and/or the second data packet.

In another possible implementation, the processing unit is configured to determine, based on information about the first timer and a transmission status of the first data packet, whether to discard the first data packet.

In another possible implementation, the transmission status includes one or more of the following: information about a transport layer and information about whether initial transmission has been performed.

In another possible implementation, the communication unit is further configured to send second indication information to the second device, where the second indication information indicates that the first data packet is discarded.

In another possible implementation, the processing unit is further configured to release a process corresponding to the first data packet.

For technical effects brought by the fourth aspect or the possible implementations, refer to the descriptions of the technical effects of the first aspect or the corresponding implementations.

A fifth aspect of embodiments of this application discloses a communication apparatus, including a communication unit and a processing unit.

The processing unit is configured to send a first data packet to a second device via a relay terminal device, and start a timer corresponding to the first data packet.

The communication unit is configured to send first indication information to the relay terminal device when the timer expires, where the first indication information indicates the relay terminal device to discard the first data packet.

In a possible implementation, the timer includes a timer at a packet data convergence protocol layer in a first device.

In another possible implementation, the first indication information includes a radio link control layer status report or an adaptation layer status report.

In another possible implementation, the processing unit is further configured to determine the first indication information.

In another possible implementation, the processing unit is further configured to determine the first indication information based on second indication information from the relay terminal device, where the second indication information indicates a data packet that is successfully sent.

In another possible implementation, the first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

For technical effects brought by the fifth aspect or the possible implementations, refer to the descriptions of the technical effects of the second aspect or the corresponding implementations.

A sixth aspect of embodiments of this application discloses a communication apparatus, including a communication unit and a processing unit.

The communication unit is configured to receive first indication information from a first device.

The processing unit is configured to discard a first data packet based on the first indication information, where the first data packet is a data packet sent by the first device to a second device via the apparatus, and the apparatus provides a relay service for the second device.

In a possible implementation, the communication unit is further configured to send second indication information to the first device, where the second indication information indicates a data packet that is successfully sent, and the first indication information is determined based on the second indication information.

In another possible implementation, the first indication information indicates a data packet discarded by a relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

For technical effects brought by the sixth aspect or the possible implementations, refer to the descriptions of the technical effects of the third aspect or the corresponding implementations.

A seventh aspect of embodiments of this application discloses a communication apparatus. The apparatus includes at least one processor and a communication interface, and the at least one processor invokes a computer program or instructions stored in a memory to perform the following operations:
receiving a first data packet from a first device through the communication interface, and starting a first timer corresponding to the first data packet, where the first data packet is a data packet to be forwarded to a second device, and a relay terminal device provides a relay service for the second device; and
discarding the first data packet when the first timer expires.

In a possible implementation, the first timer includes a timer at a radio link control layer or a timer at an adaptation layer in the relay terminal device.

In another possible implementation, a first layer, a second layer, or a third layer of the relay terminal device discards the first data packet.

In another possible implementation, the third layer receives first indication information from the first layer or the second layer, and discards the first data packet based on the first indication information.

In another possible implementation, the second layer is a lower layer of the first layer, and the third layer is a lower layer of the second layer.

In another possible implementation, the processor is configured to determine, based on a cascading relationship between the first data packet and a second data packet and/or information about a second timer corresponding to the second data packet, whether to discard the first data packet and/or the second data packet.

In another possible implementation, the processor is configured to determine, based on information about the first timer and a transmission status of the first data packet, whether to discard the first data packet.

In another possible implementation, the transmission status includes one or more of the following: information about a transport layer and information about whether initial transmission has been performed.

In another possible implementation, the processor is further configured to send second indication information to the second device, where the second indication information indicates that the first data packet is discarded.

In another possible implementation, the processor is further configured to release a process corresponding to the first data packet.

For technical effects brought by the seventh aspect or the possible implementations, refer to the descriptions of the technical effects of the first aspect or the corresponding implementations.

An eighth aspect of embodiments of this application discloses a communication apparatus. The apparatus includes at least one processor and a communication interface, and the at least one processor invokes a computer program or instructions stored in a memory to perform the following operations:
sending a first data packet to a second device via a relay terminal device, and starting a timer corresponding to the first data packet; and
sending first indication information to the relay terminal device when the timer expires, where the first indication information indicates the relay terminal device to discard the first data packet.

In a possible implementation, the timer includes a timer at a packet data convergence protocol layer in the first device.

In another possible implementation, the first indication information includes a radio link control layer status report or an adaptation layer status report.

In another possible implementation, the processor is further configured to determine the first indication information.

In another possible implementation, the processor is further configured to determine the first indication information based on second indication information from the relay terminal device, where the second indication information indicates a data packet that is successfully sent.

In another possible implementation, the first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

For technical effects brought by the eighth aspect or the possible implementations, refer to the descriptions of the technical effects of the second aspect or the corresponding implementations.

A ninth aspect of embodiments of this application discloses a communication apparatus. The apparatus includes at least one processor and a communication interface, and the at least one processor invokes a computer program or instructions stored in a memory to perform the following operations:
receiving first indication information from a first device; and
discarding a first data packet based on the first indication information, where the first data packet is a data packet sent by the first device to a second device via the apparatus, and the apparatus provides a relay service for the second device.

In a possible implementation, the processor is further configured to send second indication information to the first device through the communication interface, where the second indication information indicates a data packet that is successfully sent, and the first indication information is determined based on the second indication information.

In another possible implementation, the first indication information indicates a data packet discarded by a relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

For technical effects brought by the ninth aspect or the possible implementations, refer to the descriptions of the technical effects of the third aspect or the corresponding implementations.

A tenth aspect of embodiments of this application discloses a chip system. The chip system includes at least one processor and a communication interface, and the at least one processor is configured to execute a computer program or instructions, to implement the method according to any one of the foregoing aspects.

An eleventh aspect of embodiments of this application discloses a computer-readable storage medium. The computer-readable storage medium stores computer instructions, and when the computer instructions are run on a processor, the method according to any one of the foregoing aspects is implemented.

A twelfth aspect of embodiments of this application discloses a computer program product. The computer program product includes computer program code, and when the computer program code is run on a computer, the method according to any one of the foregoing aspects is implemented.

A thirteenth aspect of embodiments of this application discloses a communication system. The system includes: the apparatus according to the seventh aspect; or the apparatus according to the eighth aspect and the apparatus according to the ninth aspect.

### BRIEF DESCRIPTION OF DRAWINGS

The following describes accompanying drawings used in embodiments of this application.
FIG. 1 is a schematic diagram of a scenario in which a remote terminal device accesses a network device via a relay terminal device according to an embodiment of this application;
FIG. 2 is a schematic diagram of a communication system according to an embodiment of this application;
FIG. 3 is a schematic diagram of a user plane protocol stack according to an embodiment of this application;
FIG. 4 is a schematic diagram of a data transmission direction according to an embodiment of this application;
FIG. 5 is a schematic diagram of another data transmission direction according to an embodiment of this application;
FIG. 6 is a schematic diagram of a communication method according to an embodiment of this application;
FIG. 7 is a schematic diagram of disposition of a first timer according to an embodiment of this application;
FIG. 8 is a schematic diagram of a communication method;
FIG. 9 is a schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

The following describes embodiments of this application with reference to accompanying drawings in embodiments of this application.

Technical solutions in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system, or a new radio (new radio, NR) access technology system. The 5G mobile communication system may include a non-standalone (non-standalone, NSA) 5G mobile communication system and/or a standalone (standalone, SA) 5G mobile communication system.

The technical solutions provided in this application may be further applied to machine type communication (machine type communication, MTC), a long term evolution-machine type communication technology (long term evolution-machine, LTE-M), a device-to-device (device-to-device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a sixth generation mobile communication system. This is not limited in this application.

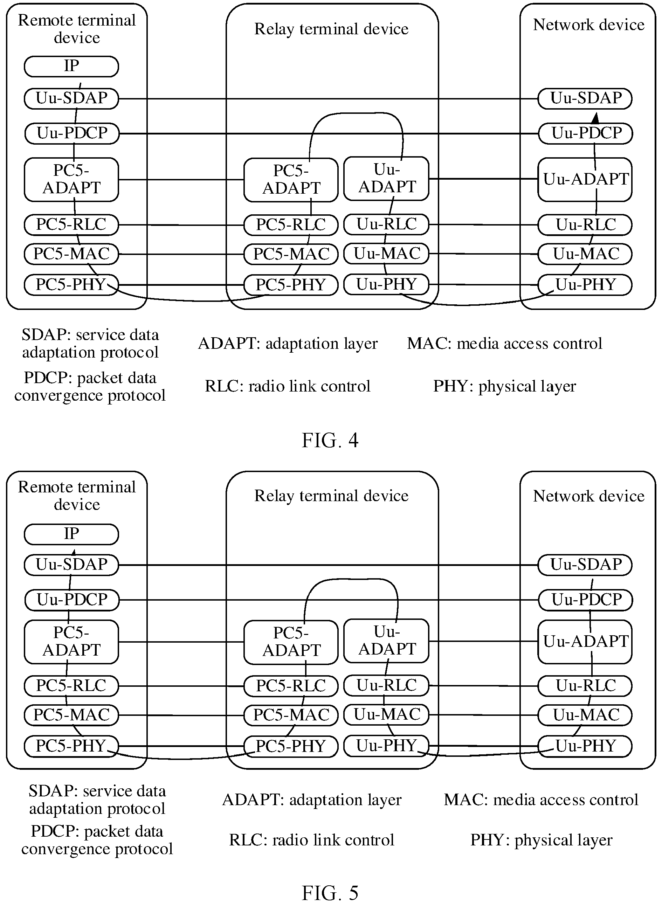

FIG. 2 is a schematic diagram of a structure of a communication system 200 according to an embodiment of this application. The communication system 200 includes a remote terminal device 201, a relay terminal device 202, and a network device 203. The relay terminal device 202 and the network device 203 may be referred to as a first device or a second device. When the first device is the remote terminal device 201, the second device is the network device 203, or when the first device is the network device 203, the second device is the remote terminal device 201. The remote terminal device 201 may perform data transmission with the network device 203 via the relay terminal device 202. Certainly, the network device 203 may also perform data transmission with the remote terminal device 201 via the relay terminal device 202. The remote terminal device 201 and the relay terminal device 202 may be terminal devices. A communication link between the remote terminal device 201 and the relay terminal device 202 may be referred to as a sidelink (sidelink, SL). Unicast communication, multicast communication, and broadcast communication are supported on the SL. User plane protocol stacks of the remote terminal device 201, the relay terminal device 202, and the network device 203 may be shown in FIG. 3. Adaptation (ADAPT) layers are disposed above a radio link control (radio link control, RLC) layer of a Uu interface between the relay terminal device 202 and the network device 203, and an RLC layer of a PC5 interface between the remote terminal device 201 and the relay terminal device 202. The remote terminal device 201 includes an internet protocol (Internet Protocol, IP) layer, a service data adaptation protocol (service data adaptation protocol, SDAP) layer, a packet data convergence protocol (packet data convergence protocol, PDCP) layer, the ADAPT layer, the RLC layer, a media access control (media access control, MAC) layer, and a physical (physical, PHY) layer. The relay terminal device 202 includes the ADAPT layer, the RLC layer, a MAC layer, and a PHY layer. The network device 203 includes an SDAP layer, a PDCP layer, the ADAPT layer, the RLC layer, a MAC layer, and a PHY layer. It can be learned from FIG. 3 that, because the relay terminal device 202 does not include an SDAP layer or a PDCP layer, the relay terminal device 202 cannot obtain PDCP layer data of the remote terminal device 201 and the network device 203. A method in embodiments of this application may be applied to the communication system 200 shown in FIG. 2. When data is transmitted by the remote terminal device 201 to the network device 203 via the relay terminal device 202, a direction in which the data passes through the user plane protocol stack is shown in FIG. 4. When data is transmitted by the network device 203 to the remote terminal device 201 via the relay terminal device 202, a direction in which the data passes through the user plane protocol stack is shown in FIG. 5.
(1) A terminal device includes user equipment (user equipment, UE), and includes a device that provides a voice and/or data connectivity for a user. Specifically, the terminal device includes a device that provides a voice for the user, a device that provides data connectivity for the user, or a device that provides a voice and data connectivity for the user. For example, a handheld device having a wireless connection function or a processing device connected to a wireless modem may be included. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or computer built-in mobile apparatus. For example, the terminal device may be a device such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device such as a barcode, a radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on the body or integrated into clothes or an accessory of a user. The wearable device is a hardware device, and implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or mounted in the vehicle), the terminal devices may be all considered as in-vehicle terminal devices. For example, the in-vehicle terminal device is also referred to as an on-board unit (on-board unit, OBU).

In embodiments of this application, the terminal device may further include a relay (relay). Alternatively, it may be understood that any device that can perform data communication with a base station may be considered as a terminal device.

In embodiments of this application, an apparatus configured to implement a function of the terminal device may be a terminal device, or may be an apparatus that can support the terminal device in implementing the function, for example, a chip system, and the apparatus may be mounted in the terminal device. In embodiments of this application, the chip system may include a chip, or may include a chip and another discrete component. In the technical solutions provided in embodiments of this application, an example in which an apparatus configured to implement a function of a terminal is a terminal device is used to describe the technical solutions provided in embodiments of this application.

(2) A network device includes, for example, an access network (access network, AN) device such as a base station (for example, an access point), and may be a device that is in an access network and that communicates with a wireless terminal device over an air interface through one or more cells. Alternatively, for example, a network device in a vehicle-to-everything (vehicle-to-everything, V2X) technology is a road side unit (road side unit, RSU). The base station may be configured to perform mutual conversion between a received over-the-air frame and an IP packet, to serve as a router between the terminal device and a remaining part of the access network. The remaining part of the access network may include an IP network. The RSU may be a fixed infrastructure entity that supports a V2X application, and may exchange a message with another entity that supports the V2X application. The network device may further coordinate attribute management of the air interface. For example, the network device may include an evolved NodeB (NodeB, eNB, or eNodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (5th generation, 5G) mobile communication technology NR system (also briefly referred to as an NR system), or may include a central unit (central unit, CU) and a distributed unit (distributed unit, DU) in a cloud access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus that can support the network device in implementing the function, for example, a chip system, and the apparatus may be mounted in the network device. In the technical solutions provided in embodiments of this application, an example in which the apparatus configured to implement the function of the network device is the network device is used to describe the technical solutions provided in embodiments of this application.

First, some terms in this application are explained and described, to facilitate understanding of a person skilled in the art.
(1) Timer at a PDCP layer: When the network device or the remote terminal device receives a PDCP service data unit (service data unit, SDU) from an upper layer in the network device or an upper layer in the remote terminal device, the network device or the remote terminal device starts a timer that is at the PDCP layer and that corresponds to the PDCP SDU. The timer may be a discard timer (discardTimer). When the timer expires or when a PDCP status report is received, and the PDCP status report indicates that the PDCP SDU is successfully transmitted, the network device or the remote terminal device discards the PDCP SDU and PDCP PDU data corresponding to the PDCP SDU. If the PDCP PDU data has been transmitted to a lower layer of the network device or a lower layer of the remote terminal device, indication information is sent to the lower layer, and the indication information indicates to discard the PDCP PDU data.
(2) Service data unit (service data unit, SDU): The service data unit may also be referred to as a service data unit, and is a data set of a user service at a specified layer. When the service data unit is transmitted to a same protocol layer of a receiving end, data, namely, a service part, does not change. Then, after the service data unit is transmitted to a lower layer, the lower layer encapsulates the service data unit in a protocol data unit (protocol data unit, PDU) and sends the protocol data unit. The service data unit is an information unit transmitted from an upper-layer protocol to a lower-layer protocol. A service data unit SDU at an N^{th} layer is in one-to-one correspondence with a PDU at an upper layer of the N^{th} layer.
(3) Functions of transport layers of the user plane protocol stack shown in FIG. 3:

SDAP layer: The SDAP layer is mainly used for mapping between quality of service (quality of service, QoS) and a DRB, and is used to mark a data packet with a quality of service flow identifier (quality of service flow identity document, QFI).

PDCP layer: The PDCP layer is usually responsible for IP header compression and decompression, transmission of user-plane data and control-plane data, and maintenance of a PDCP serial number (serial number, SN).

ADAPT layer: The ADAPT layer is mainly used to perform, on one Uu RLC channel, N:1 mapping and data multiplexing on data of different remote terminal devices, and support identification of the remote terminal device.

RLC layer: The RLC layer is mainly used to provide a segmentation service and a retransmission service for the user-plane data and the control-plane data.

MAC layer: The MAC layer is mainly used for mapping and multiplexing/demultiplexing between a logical channel and a transport channel.

PHY layer: The PHY layer is mainly used for encoding and modulation.

(4) Uu interface: The Uu interface may be an interface between a terminal device and a network device. In this application, the Uu interface may be an interface between the relay terminal device and the network device. PC5 interface: The PC5 interface may be an interface between terminal devices. In this application, the PC5 interface may be an interface between the remote terminal device and the relay terminal device.

In the scenario shown in FIG. 1, when data is transmitted to a PDCP layer of remote user equipment, the remote user equipment starts a timer at the PDCP layer. When the timer expires, a part of the data may not be sent to a network device and may be buffered in relay user equipment. Continuing to send the buffered timeout data causes a waste of an air interface resource. To resolve the foregoing problem, embodiments of this application provide the following solutions.

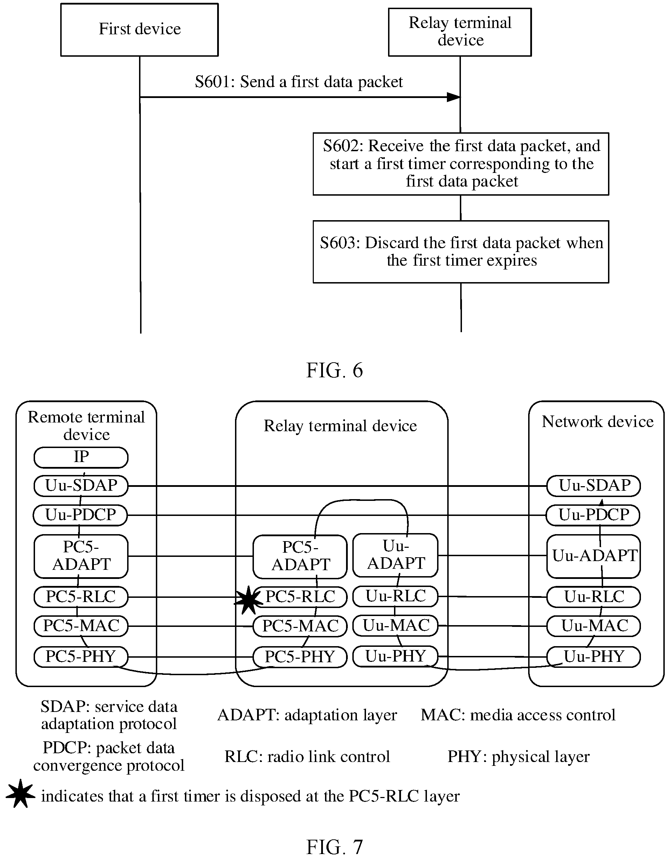

FIG. 6 shows a communication method according to an embodiment of this application. The method includes but is not limited to the following steps.

Step S601: A first device sends a first data packet to a relay terminal device.

Specifically, the first device may be a remote terminal device or a network device.

Step S602: The relay terminal device receives the first data packet from the first device, and starts a first timer corresponding to the first data packet.

Specifically, the first data packet is a data packet to be forwarded to a second device. That the first data packet is a data packet to be forwarded to a second device may indicate that the first data packet is a received data packet that has been forwarded but is not sent to the second device, or may indicate that the first data packet is a received data packet that is ready to be forwarded. The first data packet may be an SDU or a PDU. The SDU or the PDU may be a name of the first data packet at a transport layer of the relay terminal device. When the first data packet is the SDU, the first timer is a timer corresponding to the SDU. When the first data packet is the PDU, the first timer is a timer corresponding to the PDU. For example, if the first data packet is an RLC SDU, the first timer is a timer corresponding to the RLC SDU. For example, if the first data packet is an ADAPT SDU, the first timer is a timer corresponding to the ADAPT SDU.

Specifically, the first timer may be a radio link control layer timer or an adaptation layer timer. In other words, the first timer may be disposed at a first layer or a second layer of the relay terminal device. The first layer may be a transport layer mainly used to provide a segmentation service and a retransmission service for user-plane data and control-plane data, for example, an RLC layer. The second layer may be the transport layer mainly used to perform, on one Uu RLC channel, N:1 mapping and data multiplexing on data of different remote terminal devices, and support identification of the remote terminal device, for example, an ADAPT layer. The first timer may be a discard timer (discardTimer).

In a possible manner, the first timer is disposed at the first layer, for example, the RLC layer. Specifically, the first layer may be a PC5-RLC layer or a Uu-RLC layer. Whether the first timer is disposed at the PC5-RLC layer or the Uu-RLC layer is related to a transmission direction of the first data packet and a need to distinguish whether DRBs corresponding to the first data packet are different DRBs from different remote terminal devices. Details are as follows: As shown in FIG. 7, it is assumed that a transmission direction of a first data packet is an uplink transmission direction. To be specific, a remote terminal device transmits the first data packet to a network device via a relay terminal device. When there is a need to distinguish whether data radio bearers (data radio bearers, DRBs) corresponding to the first data packet are different DRBs from different remote terminal devices, a first timer may be disposed at a PC5-RLC layer, and one DRB of one remote terminal device corresponds to one first timer. When there is no need to distinguish whether DRBs corresponding to the first data packet are different DRBs from different remote terminal devices, in other words, the DRBs corresponding to the first data packet may be from a same remote terminal device or different remote terminal devices, a first timer may be disposed at a Uu-RLC layer. It is assumed that a transmission direction of a first data packet is a downlink transmission direction. To be specific, a network device transmits the first data packet to a remote terminal device via a relay terminal device. When there is a need to distinguish whether DRBs corresponding to the first data packet are different DRBs from different network devices, a first timer may be disposed at a Uu-RLC layer. When there is no need to distinguish whether DRBs corresponding to the first data packet are different DRBs from different network devices, a first timer may be disposed at a PC5-RLC layer.

In a possible manner, the first timer is disposed at the second layer, for example, the ADAPT layer. Specifically, the second layer may be a PC5-ADAPT layer or a Uu-ADAPT layer. Whether the first timer is disposed at the PC5-ADAPT layer or the Uu-ADAPT layer is related to a transmission direction of the first data packet and a need to distinguish whether DRBs corresponding to the first data packet are different DRBs from different remote terminal devices. Details are as follows: It is assumed that the transmission direction of the first data packet is an uplink transmission direction. To be specific, the remote terminal device transmits the first data packet to the network device via the relay terminal device. When there is the need to distinguish whether the DRBs corresponding to the first data packet are different DRBs from different remote terminal devices, the first timer may be disposed at the PC5-ADAPT layer, and one DRB of one remote terminal device corresponds to one first timer. When there is no need to distinguish whether the DRBs corresponding to the first data packet are different DRBs from different remote terminal devices, the first timer may be disposed at the Uu-ADAPT layer. To be specific, there is only one timer at the Uu-ADAPT layer, and the timer is the first timer. It is assumed that the transmission direction of the first data packet is a downlink transmission direction. To be specific, the network device transmits the first data packet to the remote terminal via the relay terminal device. When there is the need to distinguish whether the DRBs corresponding to the first data packet are different DRBs from different network devices, the first timer may be disposed at the Uu-ADAPT layer. When there is no need to distinguish whether the DRBs corresponding to the first data packet are different DRBs from different network devices, the first timer may be disposed at the PC5-ADAPT layer.

In an example, it is assumed that the transmission direction of the first data packet is the uplink transmission direction, and the relay terminal device receives, at the PC5-RLC layer, a DRB 1 that corresponds to the first data packet and that is from a remote terminal device 1, and a DRB 2 that corresponds to the first data packet and that is from a remote terminal device 2. In this case, at the PC5-RLC layer, the relay terminal device starts a timer 1 for the DRB 1 of the remote terminal device 1, and starts a timer 2 for the DRB 2 of the remote terminal device 2. When the timer 1 expires, the relay terminal device sends indication information to the Uu-RLC layer, to indicate to discard the DRB 1 of the remote terminal device 1. When the timer 2 expires, the relay terminal device sends indication information to the Uu-RLC layer, to indicate to discard the DRB 2 of the remote terminal device 2.

Specifically, the relay terminal device provides a relay service for the second device. When the first device is the remote terminal device, the second device is the network device, in other words, the relay terminal device provides the relay service for the network device. When the first device is the network device, the second device is the remote terminal device, in other words, the relay terminal device provides the relay service for the remote terminal device.

Step S603: The relay terminal device discards the first data packet when the first timer expires.

That the first timer expires may indicate that a time length set on the first timer is exceeded.

In a possible implementation, that the relay terminal device discards the first data packet includes: The first layer, the second layer, or a third layer of the relay terminal device discards the first data packet. The first layer may be the transport layer mainly used to provide the segmentation service and the retransmission service for the user-plane data and the control-plane data, for example, the RLC layer. Specifically, the first layer may be the PC5-RLC layer or the Uu-MAC layer. The second layer may be the transport layer mainly used to perform, on one Uu RLC channel, N:1 mapping and data multiplexing on data of different remote terminal devices, and support identification of the remote terminal device, for example, the ADAPT layer. Specifically, the second layer may be the PC5-ADAPT layer or the Uu-ADAPT layer.

In a possible implementation, that a third layer of the relay terminal device discards the first data packet includes: The third layer receives first indication information from the first layer or the second layer, and discards the first data packet based on the first indication information.

Optionally, before the first layer or the second layer sends the first indication information to the third layer, the relay terminal device determines whether the first data packet is transmitted to the third layer. If the relay terminal device determines that the first data packet is not transmitted to the third layer, the first layer or the second layer of the relay terminal device discards the first data packet. If the relay terminal device determines that the first data packet is transmitted to the third layer, the operations of receiving, by the third layer, the first indication information from the first layer or the second layer, and discarding, by the third layer, the first data packet based on the first indication information are performed.

The second layer may be a lower layer of the first layer, and the third layer may be a lower layer of the second layer. A specific example may be as follows: In a possible implementation, the first timer is disposed at the first layer, for example, the RLC layer. As shown in FIG. 7, it is assumed that the transmission direction of the first data packet is the uplink transmission direction, and the first timer is disposed at the PC5-RLC layer. In this case, the first layer may be the PC5-RLC layer, the second layer may be the ADAPT layer, and the third layer may be the Uu-RLC layer. Certainly, a Uu-MAC layer or a Uu-PHY layer may also receive the first indication information from the first layer, the second layer, or the third layer. It is assumed that the transmission direction of the first data packet is the uplink transmission direction, and the first timer is disposed at the Uu-RLC layer. In this case, the first layer may be the Uu-RLC layer, the second layer may be a Uu-MAC layer, and the third layer may be a Uu-PHY layer. It is assumed that the transmission direction of the first data packet is the downlink transmission direction, and the first timer is disposed at the Uu-RLC layer. In this case, the first layer may be the Uu-RLC layer, the second layer may be the ADAPT layer, and the third layer may be the PC5-RLC layer. Certainly, a PC5-MAC layer or a PC5-PHY layer may also receive the first indication information from the first layer, the second layer, or the third layer. It is assumed that the transmission direction of the first data packet is the downlink transmission direction, and the first timer is disposed at the PC5-RLC layer. In this case, the first layer may be the PC5-RLC layer, the second layer may be a PC5-MAC layer, and the third layer may be a PC5-PHY layer.

In a possible implementation, the first timer is disposed at the second layer, for example, the ADAPT layer. For details, refer to descriptions of disposing the first timer at the first layer. Details are not described herein again.

In a possible implementation, that the relay terminal device discards the first data packet includes: The relay terminal device determines, based on a cascading relationship between the first data packet and a second data packet and/or information about a second timer corresponding to the second data packet, whether to discard the first data packet and/or the second data packet.

Optionally, before the relay terminal device determines, based on the cascading relationship between the first data packet and the second data packet and/or the information about the second timer corresponding to the second data packet, whether to discard the first data packet and/or the second data packet, the relay terminal device determines information about a transport layer of the first data packet. This may be understood as: When determining that the first data packet is transmitted to a MAC layer, the relay terminal device determines, based on the cascading relationship between the first data packet and the second data packet and/or the information about the second timer corresponding to the second data packet, whether to discard the first data packet and/or the second data packet.

The cascading relationship between the first data packet and the second data packet may include: The first data packet and the second data packet are cascaded, or the first data packet and the second data packet are not cascaded. The information about the second timer corresponding to the second data packet may include: The second timer expires, or the second timer does not expire. If the first data packet and the second data packet are cascaded, the second data packet refers to all data packets, except the first data packet, in data that corresponds to the first data packet and that is before a segmentation operation. This is because when data before segmentation is transmitted to the RLC layer, the segmentation operation is performed, and when the data before segmentation is transmitted to the MAC layer, a cascading operation is performed. In an example, the data before segmentation is transmitted to the RLC layer, and is divided into a data packet 1, a data packet 2, and a data packet 3. The first data packet is the data packet 1, and the data packet 1 corresponds to the timer 1. The second data packet may be the data packet 2 and the data packet 3, the data packet 2 corresponds to the timer 2, and the data packet 3 corresponds to a timer 3. The timer 1 may be the first timer, and the timer 2 and the timer 3 may be the second timers. That the second timer expires indicates that the timer 2 and the timer 3 both expire, and that the second timer does not expire may indicate one of the following cases: Case 1: The timer 2 does not expire. Case 2: The timer 3 does not expire. Case 3: The timer 2 does not expire and the timer 3 does not expire.

In another possible implementation, that the relay terminal device determines, based on a cascading relationship between the first data packet and a second data packet and/or information about a second timer corresponding to the second data packet, whether to discard the first data packet and/or the second data packet includes: The relay terminal device determines, based on that the first data packet and the second data packet are cascaded and that the second timer corresponding to the second data packet expires, to discard the first data packet and the second data packet.

In an example, the data before segmentation is transmitted to the RLC layer, and is divided into the data packet 1, the data packet 2, and the data packet 3. The first data packet is the data packet 1, and the data packet 1 corresponds to the timer 1. The second data packet may be the data packet 2 and the data packet 3, the data packet 2 corresponds to the timer 2, and the data packet 3 corresponds to the timer 3. The timer 1 may be the first timer, and the timer 2 and the timer 3 may be the second timers. That the second timer corresponding to the second data packet expires indicates that the timer 2 and the timer 3 both expire, and discarding the first data packet and the second data packet indicates discarding the data packet 1, the data packet 2, and the data packet 3.

In another possible implementation, that the relay terminal device determines, based on a cascading relationship between the first data packet and a second data packet and/or information about a second timer corresponding to the second data packet, whether to discard the first data packet and/or the second data packet includes: The relay terminal device determines, based on that the first data packet and the second data packet are not cascaded, to discard the first data packet. In other words, if the relay terminal device determines that the first data packet and the second data packet are not cascaded, the relay terminal device determines to discard the first data packet.

In another possible implementation, that the relay terminal device determines, based on a cascading relationship between the first data packet and a second data packet and/or information about a second timer corresponding to the second data packet, whether to discard the first data packet and/or the second data packet includes:

The relay terminal device determines, based on that the first data packet and the second data packet are cascaded and that the second timer corresponding to the second data packet does not expire, not to discard the first data packet and the second data packet.

In an example, the data before segmentation is transmitted to the RLC layer, and is divided into the data packet 1, the data packet 2, and the data packet 3. The first data packet is the data packet 1, and the data packet 1 corresponds to the timer 1. The second data packet may be the data packet 2 and the data packet 3, the data packet 2 corresponds to the timer 2, and the data packet 3 corresponds to the timer 3. The timer 1 may be the first timer, and the timer 2 and the timer 3 may be the second timers. That the second timer corresponding to the second data packet does not expire indicates one of the following cases: Case 1: The timer 2 does not expire. Case 2: The timer 3 does not expire. Case 3: The timer 2 does not expire and the timer 3 does not expire. Then, the relay terminal device determines not to discard the data packet 1, the data packet 2, and the data packet 3, in other words, determines not to discard the first data packet and the second data packet.

In another possible implementation, that when the first timer expires, the relay terminal device discards the first data packet includes: The relay terminal device determines, based on information about the first timer and a transmission status of the first data packet, whether to discard the first data packet.

Specifically, that the relay terminal device determines, based on information about the first timer and a transmission status of the first data packet, whether to discard the first data packet occurs in the uplink transmission direction. In other words, the first device is the remote terminal device, and the second device is the network device. The information about the first timer may indicate that the first timer expires, or the first timer does not expire. The transmission status includes one or more of the following: information about a transport layer and information about whether initial transmission has been performed. For example, the relay terminal device determines, based on that the first timer expires, that the first data packet is transmitted to the MAC layer, and that initial transmission of the first data packet has been performed, not to discard the first data packet.

In another possible implementation, the relay terminal device determines, based on the information about the first timer and the transmission status of the first data packet, to discard the first data packet. The method further includes: The relay terminal device sends second indication information to the second device, and the second indication information indicates that the first data packet is discarded.

Specifically, that the relay terminal device sends second indication information to the second device occurs in the uplink transmission direction. In other words, the first device is the remote terminal device, and the second device is the network device. After the relay terminal device determines, based on that the first timer expires and that initial transmission of the first data packet has not been performed, to discard the first data packet, the relay terminal device may send the second indication information to the network device, and the second indication information indicates that the first data packet is discarded. Correspondingly, the network device receives the second indication information from the relay terminal device, and determines that the first data packet is discarded.

In another possible implementation, the method further includes: The relay terminal device releases a process corresponding to the first data packet.

Specifically, that the relay terminal device releases a process corresponding to the first data packet occurs in the downlink transmission direction. In other words, the first device is the network device, and the second device is the remote terminal device. Optionally, when releasing the process corresponding to the first data packet, the relay terminal device may further stop retransmission of the first data packet, and send an acknowledgment (acknowledge character, ACK) to the network device.

In the method described in FIG. 6, by disposing the first timer in a relay device, when the first timer expires, the first data packet that is sent by the first device to the relay terminal device and that is buffered in the relay terminal device and that is not sent to the network device can be discarded, so that air interface resources of the relay terminal device are saved.

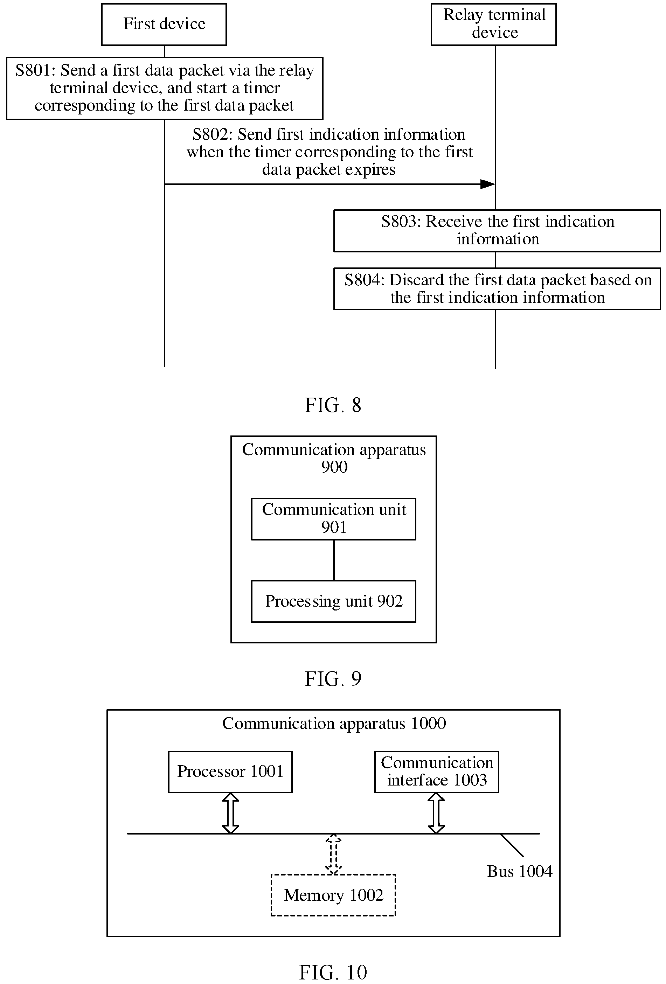

FIG. 8 shows a communication method, which is not covered by the claims and is provided solely for illustrative purposes. The method includes but is not limited to the following steps.

Step S801: A first device sends a first data packet to a second device via a relay terminal device, and starts a timer corresponding to the first data packet.

The first device may be a remote terminal device or a network device, and the second device may be a remote terminal device or a network device. When the first device is the remote terminal device, the second device is the network device, or when the first device is the network device, the second device is the remote terminal device.

Specifically, the first data packet may be a data packet that has been successfully sent by the first device to the relay terminal device and that is to be forwarded to the second device in an acknowledged mode (acknowledged mode, AM) at an RLC layer of the first device. The data packet to be forwarded to the second device may be a data packet that is received by the relay terminal device and that has been forwarded but is not sent to the second device, or may be a data packet that is received by the relay terminal device and that is ready to be forwarded. The first data packet may be an SDU or a PDU. The SDU or the PDU may be a name of the first data packet at a transport layer of the relay terminal device.

The timer corresponding to the first data packet is a timer at a PDCP layer of the first device, and the timer may be a discard timer (discardTimer).

Step S802: The first device sends first indication information to the relay terminal device when the timer corresponding to the first data packet expires.

Specifically, that the timer corresponding to the first data packet expires may indicate that a preset time length of the timer is exceeded. The first indication information indicates the relay terminal device to discard the first data packet.

Optionally, before the timer corresponding to the first data packet expires, the first device determines whether the first data packet is sent to the relay terminal device. If the first data packet is sent to the relay terminal device and the timer corresponding to the first data packet expires, a first terminal device sends the first indication information to the relay terminal device. Details of determining, by the first device, whether the first data packet is sent to the relay terminal device are as follows: Three modes are included in the RLC layer of the first device: an AM, an unacknowledged mode (unacknowledged mode, UM), and a transparent mode (transparent mode, TM). In the AM, the first terminal device may determine that the first data packet is successfully transmitted to the relay terminal device. In the UM/TM, the first terminal device may determine that the first data packet has been sent to the relay terminal device, but cannot determine that the first data packet is successfully transmitted.

Specifically, the first indication information includes the following three types:

Type 1: The first indication information includes an RLC status report or an ADAPT layer status report.
(1) The first device determines the first indication information. Optionally, the first indication information may be determined based on second indication information. The second indication information is sent by the relay terminal device to the first device, and the second indication information indicates a data packet that is successfully sent. In an example, assuming that the first device sends four data packets to the second device via the relay terminal device: a data packet 1, a data packet 2, a data packet 3, and a data packet 4, and the relay terminal device successfully sends the data packet 1 and the data packet 2 to the second device, the relay terminal device sends the second indication information to the first device, where the second indication information indicates that the data packet 1 and the data packet 2 are successfully sent. In this case, the first device determines, based on the second indication information, that the data packet 3 and the data packet 4 are not successfully sent, to determine the first indication information, where the first indication information indicates to discard the data packet 3 and the data packet 4.
(2) The first indication information indicates a data packet discarded by the relay terminal device in a first periodicity, and the data packet includes the first data packet. The first periodicity may indicate that the first device sends the first indication information to the relay terminal device periodically, that is, at intervals. In an example, it is assumed that the first periodicity is 5 milliseconds, data packets discarded by the relay terminal device in the first periodicity are a data packet 1 and a data packet 2, and the data packet 1 is the first data packet. In this case, the first indication information indicates that the data packets discarded within the 5 milliseconds are the data packet 1 and the data packet 2.

In a downlink transmission direction, when the timer corresponding to the first data packet expires, after the network device sends a downlink scheduling grant (grant) to the relay terminal device, the network device sends the first indication information to the relay terminal device.

Type 2: The first indication information may be carried in high-layer signaling, for example, radio resource control (radio resource control, RRC) signaling. The first indication information includes DRB identification information and information about a data packet that needs to be discarded in the DRB identification information, and the data packet that needs to be discarded includes the first data packet. One DRB may include a plurality of data packets. In an example, the first indication information includes information about a DRB whose identifier is 1, and a data packet 1 and a data packet 2 in the DRB whose identifier is 1. Information about data packets that need to be discarded in the DRB whose identifier is 1 is the data packet 1 and the data packet 2, and the data packet 1 is the first data packet.

Type 3: The first indication information includes a PDCP serial number (serial number, SN). Before this, the first device needs to first send PDCP SN length configuration information to the relay terminal device. Correspondingly, the relay terminal device may determine, based on the PDCP SN length configuration information, data packets corresponding to different SNs, and then determine, based on that the first indication information includes the PDCP SN, a data packet that needs to be discarded. The data packet that needs to be discarded includes the first data packet.

In an example, the first indication information is a PDCP SN, and the SN is 1, where the SN 1 corresponds to the data packet 1 and the data packet 2. The relay terminal device determines, based on the PDCP SN length configuration information, that an SN is 1 and an SN is 2. The SN 1 corresponds to the data packet 1 and the data packet 2, and the SN 2 corresponds to the data packet 3 and the data packet 4. Correspondingly, the relay terminal device discards, based on that the first indication information is the PDCP SN 1, the data packet 1 and the data packet 2 that correspond to the SN 1. The first data packet is the data packet 1 and the data packet 2 that correspond to the SN 1.

Step S803: The relay terminal device receives the first indication information from the first device.

Specifically, after receiving the first indication information from the first device, the relay terminal device discards the SDU and PDU data corresponding to the SDU.

Step S804: The relay terminal device discards the first data packet based on the first indication information.

In the method described in FIG. 8, when the timer in the first device expires, the first device sends the first indication information to the relay terminal device. After receiving the first indication information, the relay terminal device discards the first data packet that is sent by the first device to the relay terminal device and that is buffered in the relay terminal device and that is not sent to the network device. In this way, air interface resources of the relay terminal device are saved.

The foregoing describes in detail the methods in embodiments of this application. The following provides apparatuses in embodiments of this application.

FIG. 9 is a schematic diagram of a structure of a communication apparatus 900 according to an embodiment of this application. The communication apparatus 900 may include a communication unit 901 and a processing unit 902. The units are described in detail below.

The communication unit 901 is configured to receive a first data packet from a first device, and start a first timer corresponding to the first data packet, where the first data packet is a data packet to be forwarded to a second device, and a relay terminal device provides a relay service for the second device.

The processing unit 902 is configured to discard the first data packet when the first timer expires.

In a possible implementation, the first timer includes a timer at a radio link control layer or a timer at an adaptation layer in the relay terminal device.

In another possible implementation, a first layer, a second layer, or a third layer of the relay terminal device discards the first data packet.

In another possible implementation, the third layer receives first indication information from the first layer or the second layer, and discards the first data packet based on the first indication information.

In another possible implementation, the second layer is a lower layer of the first layer, and the third layer is a lower layer of the second layer.

In another possible implementation, the processing unit 902 is configured to determine, based on a cascading relationship between the first data packet and a second data packet and/or information about a second timer corresponding to the second data packet, whether to discard the first data packet and/or the second data packet.

In another possible implementation, the processing unit 902 is configured to determine, based on information about the first timer and a transmission status of the first data packet, whether to discard the first data packet.

In another possible implementation, the transmission status includes one or more of the following: information about a transport layer and information about whether initial transmission has been performed.

In another possible implementation, the communication unit 901 is further configured to send second indication information to the second device, where the second indication information indicates that the first data packet is discarded.

In another possible implementation, the processing unit 902 is further configured to release a process corresponding to the first data packet.

It should be noted that, for implementations and beneficial effects of the units, refer to corresponding descriptions in the method embodiment shown in FIG. 6.

FIG. 9 is a schematic diagram of a structure of a communication apparatus 900 according to an embodiment of this application. The communication apparatus 900 may include a communication unit 901 and a processing unit 902. The units are described in detail below.

The processing unit 902 is configured to send a first data packet to a second device via a relay terminal device, and start a timer corresponding to the first data packet.

The communication unit 901 is configured to send first indication information to the relay terminal device when the timer expires, where the first indication information indicates the relay terminal device to discard the first data packet.

In a possible implementation, the timer includes a timer at a packet data convergence protocol layer in the first device.

In another possible implementation, the first indication information includes a radio link control layer status report or an adaptation layer status report.

In another possible implementation, the processing unit 902 is further configured to determine the first indication information.

In another possible implementation, the processing unit 902 is further configured to determine the first indication information based on second indication information from the relay terminal device, where the second indication information indicates a data packet that is successfully sent.

In another possible implementation, the first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

It should be noted that, for implementations and beneficial effects of the units, refer to corresponding descriptions in the method embodiment shown in FIG. 8.

FIG. 9 is a schematic diagram of a structure of a communication apparatus 900 according to an embodiment of this application. The communication apparatus 900 may include a communication unit 901 and a processing unit 902. The units are described in detail below.

The communication unit 901 is configured to receive first indication information from a first device.

The processing unit 902 is configured to discard a first data packet based on the first indication information, where the first data packet is a data packet sent by the first device to a second device via the apparatus, and the apparatus provides a relay service for the second device.

In a possible implementation, the communication unit 901 is further configured to send second indication information to the first device, where the second indication information indicates a data packet that is successfully sent, and the first indication information is determined based on the second indication information.

In another possible implementation, the first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

It should be noted that, for implementations and beneficial effects of the units, refer to corresponding descriptions in the method embodiment shown in FIG. 8.

FIG. 10 shows a communication apparatus 1000 according to an embodiment of this application. The communication apparatus 1000 includes at least one processor 1001 and a communication interface 1003, and optionally, further includes a memory 1002. The processor 1001, the memory 1002, and the communication interface 1003 are connected to each other through a bus 1004.

The memory 1002 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1002 is configured to store a related computer program and data. The communication interface 1003 is configured to receive and send data.

The processor 1001 may be one or more central processing units (central processing units, CPUs). When the processor 1001 is one CPU, the CPU may be a single-core CPU, or may be a multi-core CPU.

The processor 1001 in the communication apparatus 1000 is configured to read computer program code stored in the memory 1002, to perform the following operations:
receiving a first data packet from a first device through the communication interface 1003, and starting a first timer corresponding to the first data packet, where the first data packet is a data packet to be forwarded to a second device, and a relay terminal device provides a relay service for the second device; and
discarding the first data packet when the first timer expires.

In a possible implementation, the first timer includes a timer at a radio link control layer or a timer at an adaptation layer in the relay terminal device.

In another possible implementation, a first layer, a second layer, or a third layer of the relay terminal device discards the first data packet.

In another possible implementation, the third layer receives first indication information from the first layer or the second layer, and discards the first data packet based on the first indication information.

In another possible implementation, the second layer is a lower layer of the first layer, and the third layer is a lower layer of the second layer.

In another possible implementation, the processor 1001 is configured to determine, based on a cascading relationship between the first data packet and a second data packet and/or information about a second timer corresponding to the second data packet, whether to discard the first data packet and/or the second data packet.

In another possible implementation, the processor 1001 is configured to determine, based on information about the first timer and a transmission status of the first data packet, whether to discard the first data packet.

In another possible implementation, the transmission status includes one or more of the following: information about a transport layer and information about whether initial transmission has been performed.

In another possible implementation, the processor 1001 is further configured to send second indication information to the second device, where the second indication information indicates that the first data packet is discarded.

In another possible implementation, the processor 1001 is further configured to release a process corresponding to the first data packet.

It should be noted that, for implementations and beneficial effects of the operations, refer to corresponding descriptions in the method embodiment shown in FIG. 6.

FIG. 10 shows a communication apparatus 1000 according to an embodiment of this application. The communication apparatus 1000 includes at least one processor 1001 and a communication interface 1003, and optionally, further includes a memory 1002. The processor 1001, the memory 1002, and the communication interface 1003 are connected to each other through a bus 1004.

The memory 1002 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1002 is configured to store a related computer program and data. The communication interface 1003 is configured to receive and send data.

The processor 1001 may be one or more central processing units (central processing units, CPUs). When the processor 1001 is one CPU, the CPU may be a single-core CPU, or may be a multi-core CPU.

The processor 1001 in the communication apparatus 1000 is configured to read computer program code stored in the memory 1002, to perform the following operations:
sending a first data packet to a second device via a relay terminal device, and starting a timer corresponding to the first data packet; and
sending first indication information to the relay terminal device when the timer expires, where the first indication information indicates the relay terminal device to discard the first data packet.

In a possible implementation, the timer includes a timer at a packet data convergence protocol layer in the first device.

In another possible implementation, the first indication information includes a radio link control layer status report or an adaptation layer status report.

In another possible implementation, the processor 1001 is further configured to determine the first indication information.

In another possible implementation, the processor 1001 is further configured to determine the first indication information based on second indication information from the relay terminal device, where the second indication information indicates a data packet that is successfully sent.

In another possible implementation, the first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

It should be noted that, for implementations and beneficial effects of the operations, refer to corresponding descriptions in the method embodiment shown in FIG. 8.

FIG. 10 shows a communication apparatus 1000 according to an embodiment of this application. The communication apparatus 1000 includes at least one processor 1001 and a communication interface 1003, and optionally, further includes a memory 1002. The processor 1001, the memory 1002, and the communication interface 1003 are connected to each other through a bus 1004.

The memory 1002 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1002 is configured to store a related computer program and data. The communication interface 1003 is configured to receive and send data.

The processor 1001 may be one or more central processing units (central processing units, CPUs). When the processor 1001 is one CPU, the CPU may be a single-core CPU, or may be a multi-core CPU.

The processor 1001 in the communication apparatus 1000 is configured to read computer program code stored in the memory 1002, to perform the following operations:
receiving first indication information from a first device; and
discarding a first data packet based on the first indication information, where the first data packet is a data packet sent by the first device to a second device via the apparatus, and the apparatus provides a relay service for the second device.

In a possible implementation, the processor 1001 is further configured to send second indication information to the first device through the communication interface 1003, where the second indication information indicates a data packet that is successfully sent, and the first indication information is determined based on the second indication information.

In another possible implementation, the first indication information indicates a data packet discarded by the relay terminal device in a first periodicity, and the data packet includes the first data packet.

In another possible implementation, the first indication information includes data radio bearer DRB identification information and indication information of a data packet that needs to be discarded in the DRB identification information, and the data packet that needs to be discarded includes the first data packet.

In another possible implementation, the first indication information includes a packet data convergence protocol PDCP serial number SN.

It should be noted that, for implementations and beneficial effects of the operations, refer to corresponding descriptions in the method embodiment shown in FIG. 8.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in the base station or the terminal as discrete components.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer programs or instructions. When the computer programs or instructions are loaded and executed on a computer, all or a part of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, applied for a relay terminal device, comprising:
receiving (S603) a first data packet from a first device, and starting a first timer corresponding to the first data packet, wherein the first data packet is a data packet to be forwarded to a second device, and the relay terminal device provides a relay service for the second device; and
discarding (S604) the first data packet when the first timer expires,
**characterised in that**
the first timer comprises a timer at a radio link control layer or a timer at an adaptation layer in the relay terminal device,
wherein, in an uplink transmission direction where the first device is a remote terminal device and the second device is a network device:
when there is a need to distinguish whether data radio bearers (DRBs) corresponding to the first data packet are different DRBs from different remote terminal devices, the first timer is disposed at a PC5-radio link control (PC5-RLC) layer or a PC5-adaptation (PC5-ADAPT) layer, and one DRB of one remote terminal device corresponds to one first timer; and
when there is no need to distinguish whether DRBs corresponding to the first data packet are different DRBs from different remote terminal devices, the first timer is disposed at a Uu-radio link control (Uu-RLC) layer or a Uu-adaptation (Uu-ADAPT) layer; or
wherein, in a downlink transmission direction where the first device is a network device and the second device is a remote terminal device:
when there is a need to distinguish whether DRBs corresponding to the first data packet are different DRBs from different network devices, the first timer is disposed at a Uu-RLC layer or a Uu-ADAPT layer; and
when there is no need to distinguish whether DRBs corresponding to the first data packet are different DRBs from different network devices, the first timer is disposed at a PC5-radio link control (PC5-RLC) layer or a PC5-adaptation (PC5-ADAPT) layer.

2. The method according to claim 1, wherein the discarding the first data packet comprises:
discarding, by a first layer, a second layer, or a third layer of the relay terminal device, the first data packet.

3. The method according to claim 2, wherein the discarding, by a third layer of the relay terminal device, the first data packet further comprises:
receiving, by the third layer, first indication information from the first layer or the second layer; and
discarding, by the third layer, the first data packet based on the first indication information.

4. A communication apparatus, wherein the apparatus comprises at least one processor and a communication interface, and the at least one processor invokes a computer program or instructions stored in a memory to perform the method according to any one of claims 1 to 3.

5. A computer-readable storage medium, wherein the computer-readable storage medium stores instructions, and when the instructions are run on a processor, the method according to any one of claims 1 to 3 is implemented.

6. A computer program product, wherein the computer program product comprises a computer program or instructions, and when the computer program or the instructions are run on a computer, the method according to any one of claims 1 to 3 is implemented.

## Patentansprüche

1. Kommunikationsverfahren, das für ein Relay-Endgerät angewendet wird, das umfasst:
Empfangen (S603) eines ersten Datenpakets von einer ersten Vorrichtung und Starten eines ersten Zeitgebers, der dem ersten Datenpaket entspricht, wobei das erste Datenpaket ein Datenpaket, das an eine zweite Vorrichtung weiterzuleiten ist, ist, und
das Relay-Endgerät einen Relay-Dienst für die zweite Vorrichtung bereitstellt; und Verwerfen (S604) des ersten Datenpakets, wenn der erste Zeitgeber abläuft,
**dadurch gekennzeichnet, dass**
der erste Zeitgeber einen Zeitgeber auf einer Funkverbindungssteuerschicht oder einen Zeitgeber auf einer Anpassungsschicht in dem Relay-Endgerät umfasst, wobei, in einer Uplink-Übertragungsrichtung, in der die erste Vorrichtung ein entferntes Endgerät ist und die zweite Vorrichtung eine Netzwerkvorrichtung ist:
wenn eine Notwendigkeit besteht zu unterscheiden, ob Datenfunkträger (DRBs), die dem ersten Datenpaket entsprechen, verschiedene DRBs von verschiedenen entfernten Endgeräten sind, der erste Zeitgeber auf einer PC5-Funkverbindungssteuer(PC5-RLC)-Schicht oder einer PC5-Anpassungs(PC5-ADAPT)-Schicht angeordnet ist, und ein DRB eines entfernten Endgeräts einem ersten Zeitgeber entspricht; und
wenn keine Notwendigkeit besteht zu unterscheiden, ob DRBs, die dem ersten Datenpaket entsprechen, verschiedene DRBs von verschiedenen entfernten Endgeräten sind, der erste Zeitgeber auf einer Uu-Funkverbindungssteuer(Uu-RLC)-Schicht oder einer Uu-Anpassungs(Uu-ADAPT)-Schicht angeordnet ist; oder
wobei in einer Downlink-Übertragungsrichtung, in der die erste Vorrichtung eine Netzwerkvorrichtung ist und die zweite Vorrichtung ein entferntes Endgerät ist:
wenn eine Notwendigkeit besteht zu unterscheiden, ob DRBs, die dem ersten Datenpaket entsprechen, verschiedene DRBs von verschiedenen Netzwerkvorrichtungen sind, der erste Zeitgeber auf einer Uu-RLC-Schicht oder einer Uu-ADAPT-Schicht angeordnet ist; und
wenn keine Notwendigkeit besteht zu unterscheiden, ob DRBs, die dem ersten Datenpaket entsprechen, verschiedene DRBs von verschiedenen Netzwerkvorrichtungen sind, der erste Zeitgeber auf einer PC5-Funkverbindungssteuer(PC5-RLC)-Schicht oder einer PC5-Anpassungs(PC5-ADAPT)-Schicht angeordnet ist.

2. Verfahren nach Anspruch 1, wobei das Verwerfen des ersten Datenpakets umfasst: Verwerfen, durch eine erste Schicht, eine zweite Schicht oder eine dritte Schicht des Relay-Endgeräts, des ersten Datenpakets.

3. Verfahren nach Anspruch 2, wobei das Verwerfen, durch eine dritte Schicht des Relay-Endgeräts, des ersten Datenpakets ferner umfasst:
Empfangen, durch die dritte Schicht, von ersten Anzeigeinformationen von der ersten Schicht oder der zweiten Schicht; und
Verwerfen, durch die dritte Schicht, des ersten Datenpakets basierend auf den ersten Anzeigeinformationen.

4. Kommunikationseinrichtung, wobei die Einrichtung mindestens einen Prozessor und eine Kommunikationsschnittstelle umfasst, und der mindestens eine Prozessor ein Computerprogramm oder Anweisungen, die in einem Speicher gespeichert sind, aufruft, um das Verfahren nach einem der Ansprüche 1 bis 3 durchzuführen.

5. Computerlesbares Speicherungsmedium, wobei das computerlesbare Speicherungsmedium Anweisungen speichert und wenn die Anweisungen auf einem Prozessor laufen gelassen werden, das Verfahren nach einem der Ansprüche 1 bis 3 implementiert wird.

6. Computerprogrammprodukt, wobei das Computerprogrammprodukt ein Computerprogramm oder Anweisungen umfasst und wenn das Computerprogramm oder die Anweisungen auf einem Computer laufen gelassen werden, das Verfahren nach einem der Ansprüche 1 bis 3 implementiert wird.

## Revendications

1. Procédé de communication, appliqué à un dispositif terminal relais, comprenant :
la réception (S603) d'un premier paquet de données en provenance d'un premier dispositif, et le démarrage d'un premier temporisateur correspondant au premier paquet de données, dans lequel le premier paquet de données est un paquet de données à transférer à un second dispositif, et le dispositif terminal relais fournit un service de relais pour le second dispositif ; et
le rejet (S604) du premier paquet de données lorsque le premier temporisateur expire,
**caractérisé en ce que**
le premier temporisateur comprend un temporisateur au niveau d'une couche de commande de liaison radio ou un temporisateur au niveau d'une couche d'adaptation dans le dispositif terminal relais,
dans lequel, dans une direction de transmission de liaison montante où le premier dispositif est un dispositif terminal distant et le second dispositif est un dispositif de réseau :
lorsqu'il est nécessaire de distinguer si des porteuses radio de données (DRB) correspondant au premier paquet de données sont des DRB différentes de différents dispositifs terminaux distants, le premier temporisateur est disposé au niveau d'une couche de commande de liaison radio PC5 (PC5-RLC) ou d'une couche d'adaptation PC5 (PC5-ADAPT), et une DRB d'un dispositif terminal distant correspond à un premier temporisateur ; et
lorsqu'il n'est pas nécessaire de distinguer si des DRB correspondant au premier paquet de données sont des DRB différentes de différents dispositifs terminaux distants, le premier temporisateur est disposé au niveau d'une couche de commande de liaison radio Uu (Uu-RLC) ou d'une couche d'adaptation Uu (Uu-ADAPT) ; ou
dans lequel, dans une direction de transmission de liaison descendante où le premier dispositif est un dispositif de réseau et le second dispositif est un dispositif terminal distant :
lorsqu'il est nécessaire de distinguer si des DRB correspondant au premier paquet de données sont des DRB différentes de différents dispositifs de réseau, le premier temporisateur est disposé au niveau d'une couche Uu-RLC ou d'une couche Uu-ADAPT ; et
lorsqu'il n'est pas nécessaire de distinguer si des DRB correspondant au premier paquet de données sont des DRB différentes de différents dispositifs de réseau, le premier temporisateur est disposé au niveau d'une couche de commande de liaison radio PC5 (PC5-RLC) ou d'une couche d'adaptation PC5 (PC5-ADAPT).

2. Procédé selon la revendication 1, dans lequel le rejet du premier paquet de données comprend :
le rejet, par une première couche, une deuxième couche ou une troisième couche du dispositif terminal relais, du premier paquet de données.

3. Procédé selon la revendication 2, dans lequel le rejet, par une troisième couche du dispositif terminal relais, du premier paquet de données comprend en outre :
la réception, par la troisième couche, de premières informations d'indication en provenance de la première couche ou de la deuxième couche ; et
le rejet, par la troisième couche, du premier paquet de données sur la base des premières informations d'indication.

4. Appareil de communication, dans lequel l'appareil comprend au moins un processeur et une interface de communication, et l'au moins un processeur invoque un programme informatique ou des instructions stockées dans une mémoire pour réaliser le procédé selon l'une quelconque des revendications 1 à 3.

5. Support de stockage lisible par ordinateur, dans lequel le support de stockage lisible par ordinateur stocke des instructions, et lorsque les instructions sont exécutées sur un processeur, le procédé selon l'une quelconque des revendications 1 à 3 est mis en œuvre.

6. Produit-programme informatique, dans lequel le produit-programme informatique comprend un programme informatique ou des instructions, et lorsque le programme informatique ou les instructions sont exécutés sur un ordinateur, le procédé selon l'une quelconque des revendications 1 à 3 est mis en œuvre.
